# EUROPEAN PATENT SPECIFICATION

(11) **EP 3 504 147 B1**
(45) Date of publication and mention of the grant of the patent: **20.09.2023**
(21) Application number: 17844041.8
(22) Date of filing: 28.08.2017
(51) Int. Cl.: E02F 3/36, B66C 3/00, B66C 13/08

(54) **ROTATOR ARRANGEMENT**
ROTATORANORDNUNG
AGENCEMENT DE ROTATEUR

(30) Priority: 26.08.2016 SE 1651154
(43) Date of publication of application: 03.07.2019
(73) Proprietor: Indexator Rotator Systems AB, 922 21 Vindeln (SE)
(72) Inventor: HARR, Joakim, 922 32 Vindeln (SE)
(74) Representative: Ehrner & Delmar Patentbyrå AB
(86) International application number: PCT/SE2017/050862
(87) International publication number: WO 2018/038677

(56) References cited:
- EP-A1- 2 460 758
- EP-A1- 2 568 259
- WO-A1-2012/067559
- WO-A1-2012/134370
- WO-A1-2016/099372
- DE-A1- 3 113 263
- DE-A1- 3 132 489
- US-A- 5 267 504
- US-A1- 2005 017 528
- US-B1- 6 435 235

## Description

### TECHNICAL FIELD

The invention relates to a rotator arrangement for providing a rotating movement to a hydraulic tool attached to said rotator arrangement.

### BACKGROUND

Rotator arrangements are widely used in foresting, harvesting or the like where a carrier, truck, tractor or the like carries an arrangement for handling excavators, timber tools, harvest tools or the like. Often such arrangements are hydraulically driven and include a crane arm, wherein the rotator arrangement is arranged to the free end of the crane arm. The rotator arrangement typically includes a motor, i.e. a hydraulic motor, to provide the rotational movement.

A challenge related to such rotator arrangements is that the rotators are exposed to heavy forces both radially and axially. Conventionally, this has been solved by dimensioning the rotator arrangement and specifically the motor with components adapted to withstand very high efforts. A problem is that that the motor, and specifically the fit between the stator and rotor needs to be very accurate and precise, which is difficult to achieve in combination with the high demands concerning the mechanical strength.

In WO 2012/134370 a rotator arrangement is described in which the forces are arranged to be taken up in an arrangement arranged to leave the interaction between the rotor and stator separated from the load distribution other than the torque provided by the motor. The arrangement is advantageous but it is also relatively heavy and space demanding, especially in the radial direction.

DE 31 32 489 A1 discloses a rotator arrangement according to the preamble of claim 1,

Therefore, there is a need of a rotator arrangement that is lighter and more compact especially radially than an ordinary arrangement, but that is capable of withstanding high efforts, without compromising the accuracy and durability of the arrangement.

### SUMMARY OF THE INVENTION

It is an object of the present invention to provide a rotator arrangement for providing a rotational movement, which is compact and which is arranged to provide the rotational movement without undue stress between the stator and rotor. A further object is to provide for a tangle free cable and hose arrangement.

The invention relates to a rotator arrangement for providing a rotating movement, the rotator arrangement comprising: a first attachment piece arranged to be attached to the crane arm or the like, a second attachment piece arranged to be attached to the tool implement, a casing joining the first attachment piece to the second attachment piece, which casing is arranged to carry the loads of the hydraulic tool and includes a bearing or the like allowing a first part of the casing to rotate with respect to a second part of the casing, and a hydraulic rotation motor arranged to provide a rotational movement between the first and second attachment pieces around an axis of rotation, the motor comprising a stator and a rotor, the rotor being arranged inside the stator so as to rotate with respect to the stator around the same axis of rotation as the first and second attachment pieces. Further, hydraulic couplings to provide the hydraulic tool with hydraulic fluid, are arranged facing the first attachment piece and substantially parallel to the axis of rotation via or through the rotor of the motor, the rotor being arranged at least partly inside said casing, wherein a torque transmission unit is arranged to transmit a rotational movement provided by the motor between the first and second attachment pieces, the torque transmission unit transmitting said rotational movement without transmitting substantial axial and radial loads.

With said arrangement hoses and cables may be arranged centrally such that they will not limit rotation of the rotator. Further, this is achieved in a slim construction in which the precision between the rotor and stator of is not compromised by heavy loads acting on the rotator. In another alternative the swivel is not a part of the rotator, but is arranged as a separate part, connected to the rotator.

According to a specific embodiment of the invention a swivel connector is arranged via which the hydraulic fluid to the hydraulic tool is arranged to be provided. The swivel connector makes sure that the hydraulic hoses for the hydraulic tool will not hinder the rotation of the rotator.

According to another specific embodiment of the invention the motor is hollow allowing hydraulic hoses to pass through the interior of both the rotor and stator along the direction of the axial axis, the hydraulic couplings being provided on a central portion of the swivel connector.

According to yet another specific embodiment of the invention the central portion of the swivel connector is arranged to rotate with the rotor, which is arranged inside the stator and a swivel house of the swivel connector is arranged to house the central portion of the swivel connector and is rotationally connected to the stator.

In one specific embodiment hydraulic couplings to provide the hydraulic motor with hydraulic fluid are arranged facing the first attachment piece and substantially parallel to the axis of rotation via or through the rotor of the motor.

In an alternative embodiment the hydraulic couplings to provide the hydraulic motor with hydraulic fluid are arranged separated from the hydraulic couplings to provide the hydraulic tool with hydraulic fluid, at a distance from and/or off-set from the axis of rotation of the rotor. In this embodiment the hydraulic fluid is preferably fed directly to the motor without the need of swiveling the supplied hydraulic fluid, i.e. said hydraulic couplings lead directly to the motor and not via a swivel connector.

In one specific embodiment the rotor and a central portion of the swivel connector are integrated and the hydraulic couplings to provide the hydraulic tool with hydraulic fluid are arranged are provided on an axial end of the integrated rotor and said central portion of the swivel connector facing the first attachment portion.

In another specific embodiment the torque transmission unit is arranged to transmit a rotational movement provided by the motor from the rotor to the first attachment piece.

Preferably, an angle meter is arranged to monitor the rotation of the first attachment piece with respect to the second attachment piece. The angle meter may be provided between any two parts that rotate with respect to each as a result of the rotation provided by the motor.

In a specific embodiment the torque transmission unit comprises an connective element arranged to slide in mating radial track extending in a radial direction orthogonal to the axial axis, so as to provide a connection between the motor and one of the attachment pieces, which connection provides substantially no gap between the motor and said attachment piece in a direction of rotation around the axial axis, but includes a freedom to move in a radial direction orthogonal to the axial axis, and in an axial direction along the axial axis.

In another specific embodiment the torque transmission unit comprises an intermediate element between the motor and the casing, which intermediate element comprises substantially no gap between the motor and the attachment piece in a direction of rotation around the axial axis, wherein the torque transmission unit includes a freedom to move both in a plane orthogonal to the axial axis, and in an axial direction along the axial axis. With this arrangement substantially no axial or radial forces are transmitted between the rotor and the stator.

In yet another specific embodiment the rotator further comprises an electric connection arranged facing the first attachment piece and substantially parallel to the axis of rotation via or through the rotor of the motor, wherein an electric swivel is arranged to provide electric signals and/or power to the hydraulic tool.

In yet another specific embodiment the rotator further comprises an electric connection arranged facing the first attachment the rotator further comprises a coupling for urea connection arranged facing the first attachment piece and substantially parallel to the axis of rotation via or through the rotor of the motor, wherein a swivel is arranged to provide urea to the hydraulic tool.

Other embodiments and advantages of the invention will be apparent from the following detailed description.

### SHORT DESCRIPTION OF THE DRAWINGS

Below the invention will be described in detail with reference to the accompanying drawings, of which:
- **Fig. 1**: is a perspective view of a rotator arrangement in accordance with a first embodiment of the invention;
- **Fig. 2**: is an exploded view of the rotator attachment piece, torque transmission unit and rotor of a rotator arrangement in accordance with the first embodiment;
- **Fig. 3**: is a sectional view of the rotator arrangement in accordance with the first embodiment;
- **Fig. 4**: is a sectional view of a rotator arrangement in accordance with a second embodiment of the invention;
- **Fig. 5**: is a sectional view of a rotator arrangement in accordance with a third embodiment of the invention;
- **Fig. 6**: is an exploded view of a specific embodiment of a torque transmission unit between a rotor and an attachment piece; and
- **Fig. 7**: is an exploded view of the torque transmission unit in fig. 6 seen from the opposite side.

### DETAILED DESCRIPTION OF THE SHOWN EMBODIMENT

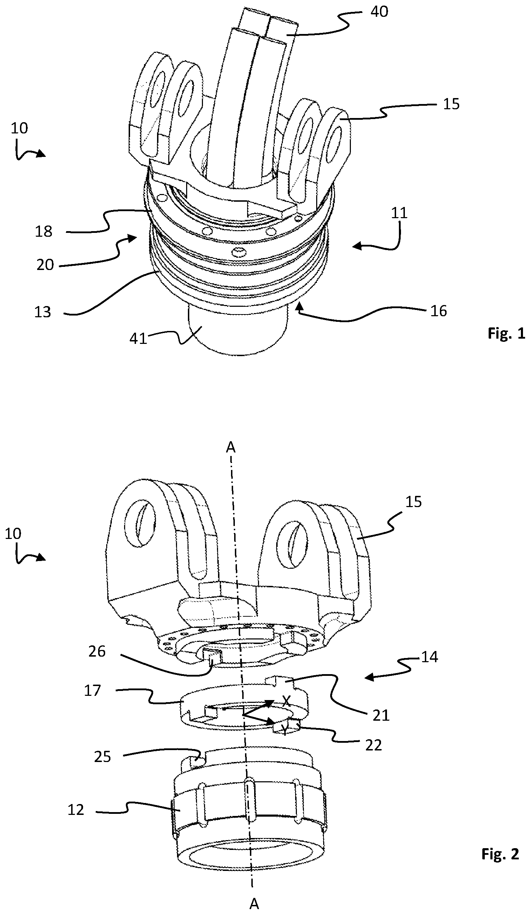

In figure 1 a first embodiment of a rotator arrangement 10 in accordance with the invention is shown. The rotator arrangement 10 is arranged for providing a rotating movement between a crane arm and a hydraulic tool, such as grip arm, shovel, harvester or the like. The rotator arrangement comprises a first attachment piece 15 arranged to be attached to the crane arm or the like, and a second attachment piece 16 arranged to be attached to the hydraulic tool. A casing 20 is arranged and joins the first attachment piece 15 to the second attachment piece 16. The casing 20 is arranged to carry the loads of the hydraulic tool and includes a bearing 18 or the like for allowing a first part of the casing to rotate with respect to a second part of the casing. A swivel 41 for swiveling hydraulic fluid to the hydraulic tool is arranged in connection to the motor 11. The second attachment piece 16 is arranged between said motor 11 and the swivel connector 41. The swivel connector 41 is hence arranged to be housed within the hydraulic tool (not shown).

The motor 11 is arranged to provide a rotational movement between the first and the second attachment pieces 15,16 around an axis of rotation A. The motor comprises a stator 13 and a rotor 12, the rotor 12 being arranged inside the stator so as to rotate with respect to the stator 13 around the same axis of rotation A as the first and second attachment pieces. Hydraulic couplings 31 arranged to connect to hydraulic hoses 40 to provide the hydraulic tool with hydraulic fluid are arranged facing the first attachment piece 15 and substantially parallel to the axis of rotation A. In accordance with the invention the hydraulic hoses are arranged to or through the rotor 12 of the motor 11. In the first embodiment shown in figures 1-3 the hydraulic hoses are arranged through the rotor 12 of the motor 11, the rotor 12 being hollow and arranged inside said casing 20. Further, in this first embodiment the casing 20 is comprised of the stator 13 and a bearing 18, resulting in a very slim construction. Further, a second set of hydraulic couplings 32, to provide the motor 11 with hydraulic fluid from hoses 44, is arranged.

An important aspect of the invention is that the rotor 12 carries no axial or radial load. This is achieved in that the casing 20 is arranged to carry axial and radial loads acting between the first and second attachment pieces 15,16. Further though, a torque transmission unit 14 is arranged to transmit a rotational movement provided by the motor 11 between the first and second attachment pieces, the torque transmission unit 14 transmitting said rotational movement without transmitting substantial axial or radial loads.

As is shown in exploded view in figure 2 the torque transmission unit 14 comprises an intermediate element 17 arranged between the motor 11 and the casing 20. In the shown embodiment it is arranged between the rotor 12 and the first attachment piece 15. The intermediate element 17 comprises substantially no gap between the rotor 12 and the first attachment piece 15 in a direction of rotation around the axial axis A. On the contrary, the torque transmission unit 14 includes a freedom to move both in a plane X,Y orthogonal to the axial axis A, and in the axial direction along the axial axis A. Hence, substantially no axial or radial forces are transmitted between the rotor 12 and the stator 13. The torque transmission unit 14 may alternatively be arranged between the rotor 12 and the second attachment piece 16, the stator in such an embodiment being connected to the first attachment piece 15 instead of the second attachment piece 16. Further, the torque transmission unit 14 may be arranged to connect the rotation of the stator to one of the attachment pieces, wherein the rotor is connected to the other of the two attachment pieces. Such an embodiment would however demand a specific casing not incorporating the stator.

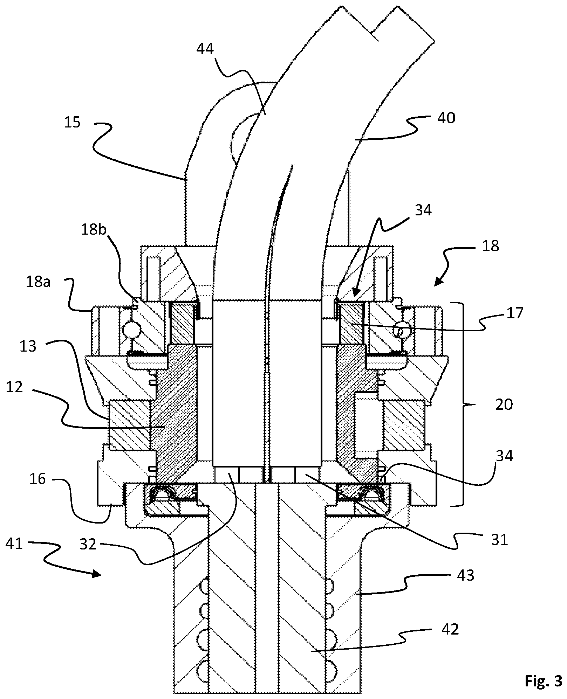

The specific intermediate element 17 of the torque transmission unit 14 of the shown first embodiment comprises a first set of engagement portions 21, in the form of protrusions in the axial direction A with parallel sides, which are to be received in engagement parts 26 in the form of recesses in the rotor attachment piece 15. A second set of engagement portions 22, also in the form of protrusions in the axial direction A with parallel sides, are received in engagement parts 25 in the form of recesses in the rotor 12. The first set of engagement portions 21 are arranged to allow a freedom of movement with respect to said rotor in a first direction X that is orthogonal to the axial axis A and the second set of engagement portions 22 are arranged to allow a freedom of movement with respect to said rotor attachment piece 15 in a second direction Y that is orthogonal to the axial axis A and to said first direction X. The parallel sides of the respective protrusions of the engagement portions 21,22 are arranged to slide within the parallel sides of the respective engaging recess of the engagement parts 25,26. Both sets of engagement portions 21,22 allow a certain freedom of movement in the axial direction A. Typically, the width of the intermediate element 17 is less than the space available provided between rotor 12 and rotor attachment part 15, such that an axial gap 34 is available to provide the certain freedom of movement in the axial direction A, as indicated in fig 3. The sets of engagement portions 21,22 of the intermediate element 17 may extend radially or axially, whatever is most suitable in any specific application.

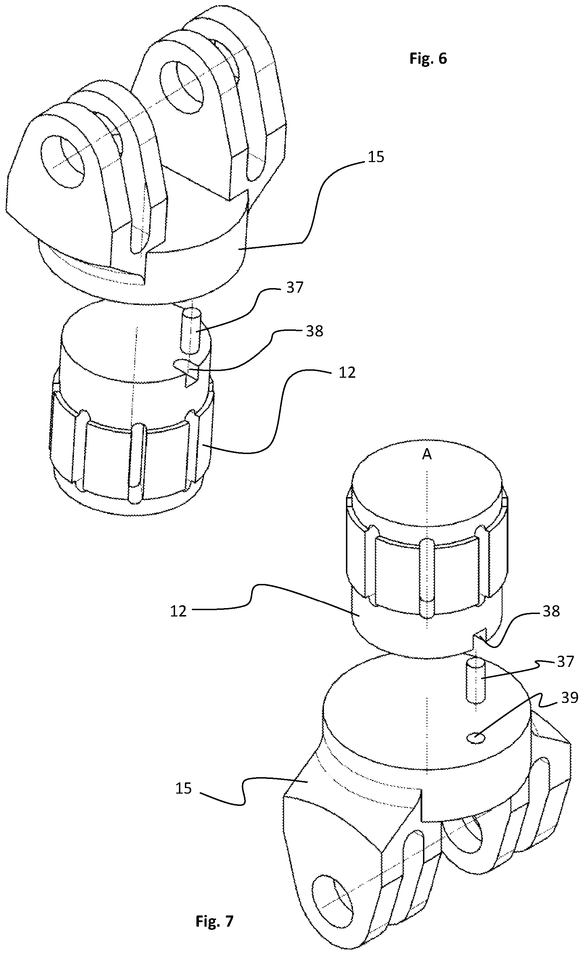

Further, in a simpler embodiment shown in figs. 6 and 7 the torque transmission unit comprises a connective element 37, typically in the form of a dowel pin, that is arranged in a mating track 38 that extends radially and in which connective element 37 may travel in the radial direction. In the embodiment shown in figs. 6 and 7 the connective element 37 is fixed in a bore 39 in the first attachment part 15, which connects to the rotor 12, wherein the rotor comprises a mating track 38 that extends radially, said track 38 having a width that corresponds to the width of the connective element 37 so as to not allow any gap in the rotational direction but to allow a sliding motion in the radial direction. In an alternative embodiment two connective elements are arranged to slide in a track extending from side to side or two corresponding mating tracks extending parallel along the same line on opposite sides of the rotor 12. As an alternative the connective element(s) 37 may be arranged on the rotor and the track(s) 39 may be arranged in the first or second attachment part. Further, the interaction may instead be arranged between the stator and one of the first and second attachment parts.

As is shown in fig. 3 a swivel connector 41 is arranged via which the hydraulic fluid to the hydraulic tool (not shown) is arranged to be provided. The hydraulic tool is arranged to be attached to the second attachment part 16, which in the shown embodiment is arranged between the stator 12 and the the house 43 of the swivel connector 41. The swivel connector 41 is hence arranged to be housed at least partly inside the hydraulic tool (not shown). The house 43 of the swivel connector 41 is arranged to rotate with the stator 13 of the motor, whereas the central portion 42 of the swivel connector 41 is arranged to rotate with the rotor 12.

In the first embodiment the motor 11 is hollow allowing the hydraulic hoses 40 to pass through the interior of both the rotor 12 and stator 13 along the direction of the axial axis A. The hydraulic couplings are provided on a central portion 42 of the swivel connector 41. As mentioned above the central portion 42 of the swivel connector 41 is arranged to rotate with the rotor 12, which is arranged inside the stator 13. A swivel house 43 of the swivel connector 41 is arranged to house the central portion 42 of the swivel connector 41 and is rotationally connected to the stator 13.

As shown in fig. 3 the hydraulic couplings 32 for connection to the hydraulic hoses 44 to provide the hydraulic motor 11 with hydraulic fluid may be arranged next to the hydraulic couplings 31 for the hydraulic tool, hence facing the first attachment piece 15 substantially parallel to the axis of rotation A via or through the rotor 12 of the motor 11. The hydraulic fluid for the motor is passed from the rotor 12, through the swivel connector 41 and back to the stator 13 of the motor 11.

An angle meter 34 is arranged to monitor the rotation of the first attachment piece 15 with respect to the second attachment part 16, e.g. by monitoring the rotation of the rotor 12 with respect to the stator 13 or the housing 20. The angle meter could be located at any location between two pieces of the rotator 10 that rotate with respect to each other when the motor 11 is driven.

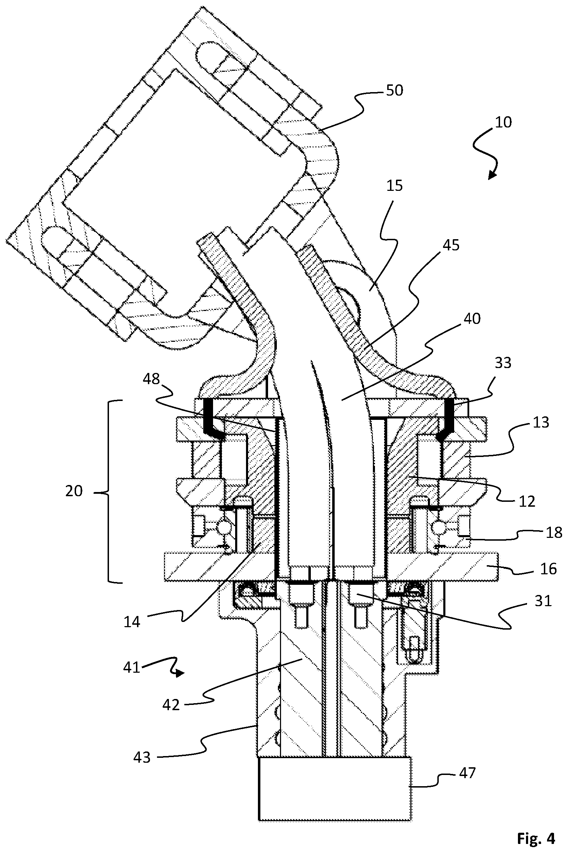

In a second embodiment of the invention shown in fig. 4 the hydraulic couplings 33 to provide the hydraulic motor 11 with hydraulic fluid are arranged separate from the hydraulic couplings 31 to provide the hydraulic tool with hydraulic fluid, at a distance from and/or off-set from the axis of rotation A of the rotor 12. In this embodiment the hydraulic fluid provided via the hydraulic couplings 33 to drive the hydraulic motor 11 does not need to be swiveled. This is due to that the first attachment piece 15, from which the hydraulic hoses to the motor 11 arrives, rotates with the casing 20, such that the hydraulic couplings 33 may be arranged directly in the casing, typically into the stator 13 of the motor.

This is due to that, in this second embodiment, the stator 13 is rotationally connected to the first attachment piece 15, which is arranged to be fastened to a crane arm or the like from which the hydraulic hoses are provided. An end piece 50 of such a crane arm is shown in fig. 4. The rotor 12 is thus arranged to rotate with the second attachment piece 16 and with the house 43 of the swivel connector 41. The central portion 42 of the swivel connector 41 is arranged to rotate with the stator 13. In the shown embodiment a tube 48 is provided to connect a lower portion of the first attachment piece 15 to the central portion 42 of the swivel connector 41.

As for the first embodiment the second attachment piece 16 of the second embodiment is arranged between the motor 11 and the swivel connector 41. The swivel 41 is hence arranged to be housed within the hydraulic tool.

Also visible in fig. 4 is an electric swivel 47 which is arranged in connection to the swivel connector 41 to provide electric power and signals to the tool or control functions arranged in connection thereto. Namely, most hydraulic tools have electrically controlled functions, which needs to be electrically controlled and/or powered, and in order to provide the necessary electricity over the rotating parts without the need of hindering cables the electric power and signals needs to be swiveled. The electric cable(s) is/are preferably arranged alongside the hydraulic couplings facing the first attachment piece 15 and substantially parallel to the axis of rotation A. Hence in accordance with the first and second embodiment of the invention the electric cable(s) is/are arranged through the rotor 12 of the motor 11. Likewise, a conduit for providing urea may be arranged alongside the hydraulic hoses and electric cables. Urea is used in forestry applications and therefore the possibility of providing urea should preferably be available to all rotators. Further, a swivel for Urea is hence also provided in connection to the swivel connector 41.

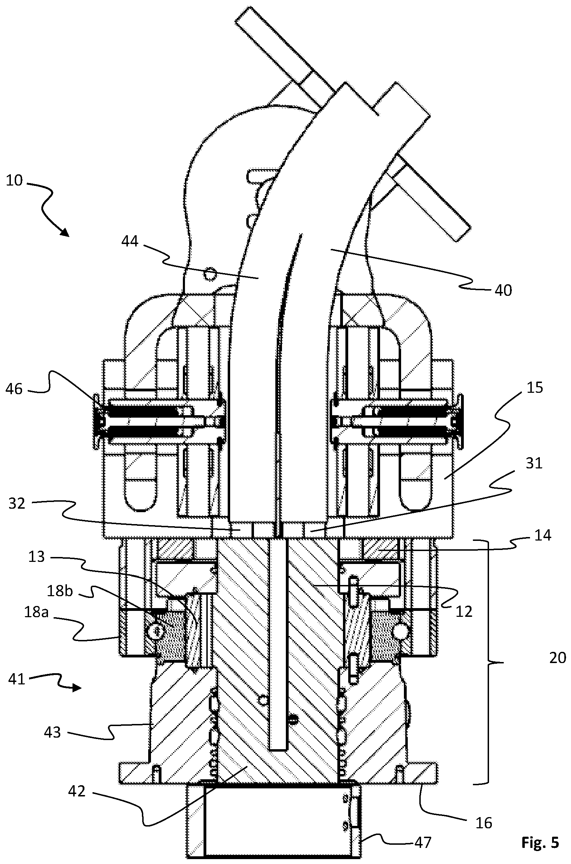

In the third embodiment shown in fig. 5 the rotor 12 and the central portion 42 of the swivel connector 41 are integrated, wherein the hydraulic couplings 31 to provide the hydraulic tool with hydraulic fluid are provided on an axial end of the integrated rotor 12 and said central portion 42 of the swivel connector 41, facing the first attachment portion 15 in order to connect to hydraulic hoses 40 arriving from the crane arm. The hydraulic couplings 32 to connect to the hoses 44 for providing hydraulic fluid to the motor 11 are also provided on an axial end of the integrated rotor 12 and said central portion 42, e.g. alongside the hydraulic couplings 31 for the hydraulic tool. Connections for urea and electrical power and signals are preferably also provided alongside said hydraulic couplings 31,32. An electric swivel 47 is arranged in connection to the swivel connector 41.

In this embodiment the electric swivel 47 is arranged to be housed at least partially inside the hydraulic tool (not shown), whereas the swivel connector 41 is a part of the casing 20. Specifically, the second attachment piece 16 for attaching the hydraulic tool to the rotator 10 is provided as an integrated part of the house 43 of the swivel connector 41.

As is visible in figure 5 the first attachment part 15 is attached to an outer part 18a of the bearing 18, which is arranged to rotate with the rotor 12. The torque transmission unit 14 is however arranged to transmit the rotational movement provided by the motor 11 from the rotor 12 to the first attachment piece 15, the torque transmission unit 14 transmitting said rotational movement without transmitting substantial axial and radial loads. The first attachment piece 15 is hence not rigidly connected to the rotor 12. Instead the first attachment piece 15 and the rotor 12 are rotationally interconnected via the torque transmission unit 14. The inner part 18b of the bearing 18 is rotationally connected to the stator 13 and to the house 43 of the swivel connector 41.

An advantage of the inventive embodiments with respect to prior art rotators is that the hydraulic hoses will not limit the rotation of the motor 11. Further, this may be achieved in a slimmed, non-bulky construction because the couplings are arranged centrally along the axial direction A to or through a rotor that is not carrying loads, which may be accomplished due to the torque transmission unit 14.

As apparent in fig. 5 the rotator arrangement is provided with a brake 46 for limiting a swinging movement of the rotator 10 with respect to the crane arm or the like, on which it is arranged.

Above the invention has been described with reference to specific embodiments. The invention is however no limited to these embodiments. For instance, the invention comprises any feasible combination of the shown embodiments as well as other not shown embodiment with similar functionality. The invention is only limited by the appended claims.

## Claims

1. A rotator arrangement (10) for providing a rotating movement between a crane arm or the like and a hydraulic tool, the rotator arrangement comprising:
- a first attachment piece (15) arranged to be attached to the crane arm or the like,
- a second attachment piece (16) arranged to be attached to the tool implement,
- a casing (20) joining the first attachment piece (15) to the second attachment piece (16), which casing (20) is arranged to carry the loads of the hydraulic tool and includes a bearing (18) or the like allowing a first part of the casing (20) to rotate with respect to a second part of the casing (20), and
- a hydraulic rotation motor (11) arranged to provide a rotational movement between the first and second attachment pieces (15,16) around an axis of rotation (A), the motor comprising a stator (13) and a rotor (12), the rotor (12) being arranged inside the stator (13) so as to rotate with respect to the stator (13) around the same axis of rotation (A) as the first and second attachment pieces, whereby hydraulic couplings (31) to provide the hydraulic tool with hydraulic fluid are arranged facing the first attachment piece (15) and substantially parallel to the axis of rotation (A) via or through the rotor (12) of the motor (11), the rotor (12) being arranged at least partly inside said casing (20), **characterised in that** a torque transmission unit (14) is arranged to transmit a rotational movement provided by the motor (11) between the first and second attachment pieces (15,16), the torque transmission unit transmitting said rotational movement without transmitting substantial axial and radial loads.

2. The rotator arrangement (10) according to claim 1, wherein the torque transmission unit (14) comprises a connective element (37) arranged to slide in mating radial track (38) extending in a radial direction orthogonal to the axial axis (A), so as to provide a connection between the motor 11 and one of the attachment pieces (15,16), which connection provides substantially no gap between the motor (11) and said attachment piece (15,16) in a direction of rotation around the axial axis (A), but includes a freedom to move in a radial direction orthogonal to the axial axis (A), and in an axial direction along the axial axis (A).

3. The rotator arrangement (10) according to claim 1, wherein the torque transmission unit (14) comprises an intermediate element (17) between the motor and the casing, which intermediate element (17) comprises substantially no gap between the motor (11) and one of the attachment pieces (15,16) in a direction of rotation around the axial axis (A) and wherein the torque transmission unit (14) includes a freedom to move both in a plane (X,Y) orthogonal to the axial axis (A), and in an axial direction along the axial axis (A).

4. The rotator arrangement (10) according to anyone of the preceding claims, wherein a swivel connector (41) is arranged via which the hydraulic fluid to the hydraulic tool is arranged to be provided.

5. The arrangement according to claim 4, wherein the motor (11) is hollow allowing hydraulic hoses (40) to pass through the interior of both the rotor (12) and stator (13) along the direction of the axial axis (A), the hydraulic couplings being provided on a central portion (42) of the swivel connector (41).

6. The arrangement according to claim 5, wherein the central portion (42) of the swivel connector (41) is arranged to rotate with the rotor (13), which is arranged inside the stator (12) and a swivel house (43) of the swivel connector (41) is arranged to house the central portion (42) of the swivel connector (41) and is rotationally connected to the stator (13).

7. The arrangement according to anyone of the preceding claims, wherein hydraulic couplings (32) to provide the hydraulic motor (11) with hydraulic fluid are arranged facing the first attachment piece (15) and substantially parallel to the axis of rotation (A) via or through the rotor (12) of the motor (11).

8. The arrangement according to anyone of the claims 1-6, wherein hydraulic couplings (33) to provide the hydraulic motor (11) with hydraulic fluid are arranged separated from the hydraulic couplings (31) to provide the hydraulic tool with hydraulic fluid, at a distance from and/or off-set from the axis of rotation (A) of the rotor (12).

9. The arrangement according to claim 8, wherein the hydraulic couplings (33) to provide the hydraulic motor (11) with hydraulic fluid are lead directly to the motor (11) and not via a swivel connector.

10. The arrangement according to claim 4, wherein the rotor (12) and a central portion (42) of the swivel connector (41) are integrated and wherein the hydraulic couplings (31) to provide the hydraulic tool with hydraulic fluid are provided on an axial end of the integrated rotor (12) and said central portion (42) of the swivel connector (41) facing the first attachment portion (15).

11. The arrangement according to claim 10, wherein the torque transmission unit (14) is arranged to transmit a rotational movement provided by the motor (11) from the rotor (12) to the first attachment piece (15).

12. The arrangement according to anyone of the preceding claims, wherein an angle meter (34) is arranged to monitor the rotation of the first attachment piece (15) with respect to the second attachment piece (16).

13. The rotator arrangement (10) according to anyone of the preceding claims, wherein the rotator further comprises an electric connection arranged facing the first attachment piece (15) and substantially parallel to the axis of rotation (A) via or through the rotor (12) of the motor (11), and wherein an electric swivel is arranged to provide electric signals and/or power to the hydraulic tool.

14. The rotator arrangement (10) according to anyone of the preceding claims, wherein the rotator further comprises a coupling for urea connection arranged facing the first attachment piece (15) and substantially parallel to the axis of rotation (A) via or through the rotor (12) of the motor (11), and wherein a swivel is arranged to provide urea to the hydraulic tool.

## Patentansprüche

1. Rotatoranordnung (10) zum Vorsehen einer Drehbewegung zwischen einem Kranarm o. ä. und einem Hydraulikwerkzeug, wobei die Rotatoranordnung Folgendes umfasst:
- ein erstes Befestigungsteil (15), das dazu angeordnet ist, am Kranarm o. ä. befestigt zu sein,
- ein zweites Befestigungsteil (16), das dazu angeordnet ist, am Werkzeugeinsatz befestigt zu sein, wobei ein Gehäuse (20) das erste Befestigungsteil (15) mit dem zweiten Befestigungsteil (16) verbindet, wobei das Gehäuse (20) dazu angeordnet ist, die Lasten des Hydraulikwerkzeugs zu tragen, und ein Lager (18) o. ä. umfasst, das die Drehung eines ersten Teils des Gehäuses (20) in Bezug zu einem zweiten Teil des Gehäuses (20) zulässt, und
- einen Hydraulikdrehmotor (11), der dazu angeordnet ist, eine Drehbewegung zwischen dem ersten und zweiten Befestigungsteil (15, 16) um eine Drehachse (A) vorzusehen, wobei der Motor einen Stator (13) und einen Rotor (12) umfasst, wobei der Rotor (12) innerhalb des Stators (13) angeordnet ist, um sich in Bezug zum Stator (13) um dieselbe Drehachse (A) zu drehen wie das erste und zweite Befestigungsteil,
wobei
Hydraulikkupplungen (31), um das Hydraulikwerkzeug mit Hydraulikfluid zu versehen, dem ersten Befestigungsteil (15) zugewandt und im Wesentlichen parallel zur Drehachse (A) mittels oder durch den Rotor (12) des Motors (11) angeordnet sind, wobei der Rotor (12) zumindest teilweise innerhalb des Gehäuses (20) angeordnet ist,
**dadurch gekennzeichnet, dass**
eine Drehmomentübertragungseinheit (14) dazu angeordnet ist, eine vom Motor (11) vorgesehene Drehbewegung zwischen dem ersten und zweiten Befestigungsteil (15, 16) zu übertragen, wobei die Drehmomentübertragungseinheit die Drehbewegung überträgt, ohne im Wesentlichen axiale und radiale Lasten zu übertragen.

2. Rotatoranordnung (10) nach Anspruch 1, wobei die Drehmomentübertragungseinheit (14) ein Verbindungselement (37) umfasst, das dazu angeordnet ist, in eine passende Radialschiene (38) zu gleiten, die sich in eine Radialrichtung senkrecht zur axialen Achse (A) erstreckt, um eine Verbindung zwischen dem Motor (11) und einem der Befestigungsteile (15, 16) vorzusehen, wobei die Verbindung im Wesentlichen keinen Spalt zwischen dem Motor (11) und dem Befestigungsteil (15, 16) in eine Drehrichtung um die axiale Achse (A) vorsieht, jedoch eine Bewegungsfreiheit in Radialrichtung senkrecht zur axialen Achse (A) und in eine Axialrichtung entlang der axialen Achse (A) umfasst.

3. Rotatoranordnung (10) nach Anspruch 1, wobei die Drehmomentübertragungseinheit (14) ein Zwischenelement (17) zwischen dem Motor und dem Gehäuse umfasst, wobei das Zwischenelement (17) im Wesentlichen keinen Spalt zwischen dem Motor (11) und einem der Befestigungsteile (15, 16) in eine Drehrichtung um die axiale Achse (A) vorsieht und wobei die Drehmomentübertragungseinheit (14) eine Bewegungsfreiheit umfasst, sich sowohl in einer Ebene (X, Y) senkrecht zur axialen Achse (A) als auch in eine Axialrichtung entlang der axialen Achse (A) zu bewegen.

4. Rotatoranordnung (10) nach einem der vorstehenden Ansprüche, wobei ein Schwenkverbinder (41) angeordnet ist, über den Hydraulikfluid zum Hydraulikwerkzeug vorzusehen ist.

5. Anordnung nach Anspruch 4, wobei der Motor (11) hohl ist, wodurch Hydraulikschläuche (40) durch das Innere sowohl des Rotors (12) als auch des Stators (13) entlang der Richtung der axialen Achse (A) verlaufen können, wobei die Hydraulikkupplungen an einem Mittelabschnitt (42) des Schwenkverbinders (41) vorgesehen sind.

6. Anordnung nach Anspruch 5, wobei der Mittelabschnitt (42) des Schwenkverbinders (41) dazu angeordnet ist, sich mit dem Rotor (13) zu drehen, der innerhalb des Stators (12) angeordnet ist, und wobei ein Schwenkgehäuse (43) des Schwenkverbinders (41) dazu angeordnet ist, den Mittelabschnitt (42) des Schwenkverbinders (41) aufzunehmen, und mit dem Stator (13) drehbar verbunden ist.

7. Anordnung nach einem der vorstehenden Ansprüche, wobei Hydraulikkupplungen (32), um den Hydraulikmotor (11) mit Hydraulikfluid zu versehen, dem ersten Befestigungsteil (15) zugewandt und im Wesentlichen parallel zur Drehachse (A) mittels oder durch den Rotor (12) des Motors (11) angeordnet sind.

8. Anordnung nach einem der Ansprüche 1-6, wobei Hydraulikkupplungen (33), um den Hydraulikmotor (11) mit Hydraulikfluid zu versehen, getrennt von den Hydraulikkupplungen (31), um das Hydraulikwerkzeug mit Hydraulikfluid zu versehen, in einer Entfernung von und/oder zur Drehachse (A) des Rotors (12) versetzt angeordnet sind.

9. Anordnung nach Anspruch 8, wobei die Hydraulikkupplungen (33), um den Hydraulikmotor (11) mit Hydraulikfluid zu versehen, direkt zum Motor (11) geleitet werden und nicht über einen Schwenkverbinder.

10. Anordnung nach Anspruch 4, wobei der Rotor (12) und ein Mittelabschnitt (42) des Schwenkverbinders (41) integriert sind und wobei die Hydraulikkupplungen (31), um das Hydraulikwerkzeug mit Hydraulikfluid zu versehen, an einem axialen Ende des integrierten Rotors (12) und des Mittelabschnitts (42) des Schwenkverbinders (41) dem ersten Befestigungsabschnitt (15) zugewandt vorgesehen sind.

11. Anordnung nach Anspruch 10, wobei die Drehmomentübertragungseinheit (14) dazu angeordnet ist, eine durch den Motor (11) vorgesehene Drehbewegung vom Rotor (12) auf das erste Befestigungsteil (15) zu übertragen.

12. Anordnung nach einem der vorstehenden Ansprüche, wobei ein Winkelmesser (34) dazu angeordnet ist, die Drehung des ersten Befestigungsteils (15) in Bezug zum zweiten Befestigungsteil (16) zu überwachen.

13. Rotatoranordnung (10) nach einem der vorstehenden Ansprüche, wobei der Rotator ferner einen elektrischen Anschluss umfasst, der mittels oder durch den Rotor (12) des Motors (11) dem ersten Befestigungsteil (15) zugewandt und im Wesentlichen parallel zur Drehachse (A) angeordnet ist, und wobei ein elektrischer Drehzapfen dazu angeordnet ist, das Hydraulikwerkzeug mit elektrischen Signale und/oder Strom zu versorgen.

14. Rotatoranordnung (10) nach einem der vorstehenden Ansprüche, wobei der Rotator ferner eine Kupplung für einen Urea-Anschluss umfasst, die mittels oder durch den Rotor (12) des Motors (11) dem ersten Befestigungsteil (15) zugewandt und im Wesentlichen parallel zur Drehachse (A) angeordnet ist, und wobei ein Drehzapfen dazu angeordnet ist, das Hydraulikwerkzeug mit Urea zu versorgen.

## Revendications

1. Système de rotateur (10) servant à produire un mouvement de rotation entre une flèche de grue ou similaire et un outil hydraulique, le système de rotateur comprenant :
- une première pièce de fixation (15) conçue pour être fixée à la flèche de grue ou similaire,
- une seconde pièce de fixation (16) conçue pour être fixée à l'outil,
- une enveloppe (20) raccordant la première pièce de fixation (15) à la seconde pièce de fixation (16), ladite enveloppe (20) étant conçue pour supporter les charges de l'outil hydraulique et comprenant un palier (18) ou similaire permettant à une première partie de l'enveloppe (20) de tourner par rapport à une seconde partie de l'enveloppe (20), et
- un moteur de rotation hydraulique (11) conçu pour produire un mouvement de rotation entre les première et seconde pièces de fixation (15, 16) autour d'un axe de rotation (A), le moteur comprenant un stator (13) et un rotor (12), le rotor (12) étant placé à l'intérieur du stator (13) de façon à tourner par rapport au stator (13) autour du même axe de rotation (A) que les première et seconde pièces de fixation, des raccords hydrauliques (31) permettant d'alimenter l'outil hydraulique en fluide hydraulique étant placés de façon à être orientés vers la première pièce de fixation (15) et sensiblement parallèlement à l'axe de rotation (A) à travers le rotor (12) du moteur (11), le rotor (12) étant placé au moins partiellement à l'intérieur de ladite enveloppe (20),
**caractérisé en ce que**
une unité de transmission de couple (14) est conçue pour transmettre un mouvement de rotation produit par le moteur (11) entre les première et seconde pièces de fixation (15, 16), l'unité de transmission de couple transmettant ledit mouvement de rotation sans transmettre de charges axiales et radiales importantes.

2. Système de rotateur (10) selon la revendication 1, dans lequel l'unité de transmission de couple (14) comprend un élément de raccordement (37) conçu pour glisser dans une rainure radiale correspondante (38) s'étendant dans une direction radiale orthogonale à l'axe axial (A), de façon à assurer un raccordement entre le moteur (11) et une des pièces de fixation (15, 16), ledit raccordement étant tel qu'il n'existe sensiblement pas d'espace entre le moteur (11) et ladite pièce de fixation (15, 16) dans une direction de rotation autour de l'axe axial (A), mais possédant une liberté de mouvement dans une direction radiale orthogonale à l'axe axial (A), et dans une direction axiale le long de l'axe axial (A).

3. Système de rotateur (10) selon la revendication 1, dans lequel l'unité de transmission de couple (14) comprend un élément intermédiaire (17) entre le moteur et l'enveloppe, ledit élément intermédiaire (17) ne comprenant sensiblement pas d'espace entre le moteur (11) et une des pièces de fixation (15, 16) dans une direction de rotation autour de l'axe axial (A), et dans lequel l'unité de transmission de couple (14) possède une liberté de mouvement à la fois dans un plan (X, Y) orthogonal à l'axe axial (A), et dans une direction axiale le long de l'axe axial (A).

4. Système de rotateur (10) selon l'une quelconque des revendications précédentes, comprenant un dispositif de raccordement à pivotement (41) permettant l'alimentation en fluide hydraulique de l'outil hydraulique.

5. Système selon la revendication 4, dans lequel le moteur (11) est creux, de sorte que des flexibles hydrauliques (40) peuvent passer à travers l'intérieur à la fois du rotor (12) et du stator (13) le long de la direction de l'axe axial (A), les raccords hydrauliques étant placés sur une partie centrale (42) du dispositif de raccordement à pivotement (41).

6. Système selon la revendication 5, dans lequel la partie centrale (42) du dispositif de raccordement à pivotement (41) est conçue pour tourner avec le rotor (13), qui est placé à l'intérieur du stator (12) et un logement de pivotement (43) du dispositif de raccordement à pivotement (41) est conçu pour loger la partie centrale (42) du dispositif de raccordement à pivotement (41) et est raccordé en rotation au stator (13).

7. Système selon l'une quelconque des revendications précédentes, dans lequel des raccords hydrauliques (32) permettant d'alimenter le moteur hydraulique (11) en fluide hydraulique sont placés de façon à être orientés vers la première pièce de fixation (15) et sensiblement parallèlement à l'axe de rotation (A) à travers le rotor (12) du moteur (11).

8. Système selon l'une quelconque des revendications 1 à 6, dans lequel des raccords hydrauliques (33) permettant d'alimenter le moteur hydraulique (11) en fluide hydraulique sont placés séparément des raccords hydrauliques (31) permettant d'alimenter l'outil hydraulique en fluide hydraulique, à une certaine distance et/ou de manière décalée relativement à l'axe de rotation (A) du rotor (12).

9. Système selon la revendication 8, dans lequel les raccords hydrauliques (33) permettant d'alimenter le moteur hydraulique (11) en fluide hydraulique vont au moteur (11) directement et non à travers un dispositif de raccordement à pivotement.

10. Système selon la revendication 4, dans lequel le rotor (12) et une partie centrale (42) du dispositif de raccordement à pivotement (41) sont intégrés l'un à l'autre et dans lequel les raccords hydrauliques (31) permettant d'alimenter l'outil hydraulique en fluide hydraulique sont placés sur une extrémité axiale du rotor intégré (12) et ladite partie centrale (42) du dispositif de raccordement à pivotement (41) de façon à être orientés vers la première pièce de fixation (15).

11. Système selon la revendication 10, dans lequel l'unité de transmission de couple (14) est conçue pour transmettre un mouvement de rotation produit par le moteur (11) du rotor (12) à la première pièce de fixation (15) .

12. Système selon l'une quelconque des revendications précédentes, dans lequel un dispositif de mesure d'angle (34) est conçu pour contrôler la rotation de la première pièce de fixation (15) par rapport à la seconde pièce de fixation (16).

13. Système de rotateur (10) selon l'une quelconque des revendications précédentes, dans lequel le rotateur comprend, en outre, une connexion électrique placée de façon à être orientée vers la première pièce de fixation (15) et sensiblement parallèlement à l'axe de rotation (A) à travers le rotor (12) du moteur (11), et dans lequel un pivot électrique est conçu pour fournir des signaux électriques et/ou de l'énergie à l'outil hydraulique.

14. Système de rotateur (10) selon l'une quelconque des revendications précédentes, dans lequel le rotateur comprend, en outre, un raccord pour la fourniture d'urée placé de façon à être orienté vers la première pièce de fixation (15) et sensiblement parallèlement à l'axe de rotation (A) à travers le rotor (12) du moteur (11), et dans lequel un pivot est conçu pour fournir de l'urée à l'outil hydraulique.
